# EUROPÄISCHE PATENTSCHRIFT

(11) **EP 1 634 783 B1**
(45) Veröffentlichungstag und Bekanntmachung des Hinweises auf die Patenterteilung: **02.07.2008**
(21) Anmeldenummer: 05018968.7
(22) Anmeldetag: 01.09.2005
(51) Int. Cl.: B60S 3/06, A46B 13/00

(54) **Bausatz für den Besatz einer Arbeitswalze einer Fahrzeugwaschvorrichtung**
Kit for mounting the trimming on a work roll of a car wash apparatus
Kit de montage pour la garniture d'un cylindre de travail d'une installation de lavage de voiture

(30) Priorität: 13.09.2004 DE 102004044582
(43) Veröffentlichungstag der Anmeldung: 15.03.2006
(73) Patentinhaber: Auwa Industriebürsten GmbH, 86159 Augsburg (DE)
(72) Erfinder: Böhm, Franz, 86316 Friedberg (DE)
(74) Vertreter: Munk, Ludwig

(56) Entgegenhaltungen:
- EP-A- 0 965 288
- DE-A1- 10 242 937
- GB-A- 223 718
- US-A- 1 123 516

## Beschreibung

Die Erfindung betrifft einen Bausatz für einem mit zum Eingriff mit einer Fahrzeugoberfläche bringbaren Behandlungselementen versehenen Besatz einer Arbeitswalze einer Fahrzeugwaschvorrichtung.

In der Praxis kommen unterschiedliche Behandlungselemente zur Anwendung. Dabei kann es sich um Filamente, Streifen oder Fahnen mit und ohne Schlitzen und dergleichen jeweils aus Kunststoff und/oder Textilmaterial handeln. Bei den bekannten Anordnungen erfordert jede Art von Behandlungselementen eine spezielle Ausbildung der Arbeitswalze. Ein Wechsel von einer Art von Behandlungselementen auf eine andere Art ist daher bisher ohne Austausch der kompletten Arbeitswalze praktisch nicht möglich. Die Erfahrung hat jedoch gezeigt, dass es häufig notwendig werden kann, die Art der verwendeten Behandlungselemente zu wechseln. Dies erforderte bisher einen nicht unbeträchtlichen Aufwand.

Ein gattungsgemäßer Bausatz ist im Dokument DE-A-10 242 937 offenbart.

Hiervon ausgehend ist es daher die Aufgabe der vorliegenden Erfindung, einen Besatz für eine Arbeitswalze einer Fahrzeugwaschvorrichtung oben genannter Art zur Verfügung zu stellen, der einen einfachen und schnellen Wechsel der verwendeten Behandlungselemente ermöglicht.

Diese Aufgabe wird durch die Merkmalskombination des Anspruchs 1 gelöst.

Hierdurch kommt ein Bausatz für einen mit zum Eingriff mit einer Fahrzeugoberfläche bringbaren Behandlungselementen versehenen Besatz einer Arbeitswalze einer Fahrzeugwaschvorrichtung in Vorschlag, der mehrere axiale Abschnitte umfasst, die jeweils einen radial inneren, auf einer zugeordneten Welle der Fahrzeugwaschvorrichtung aufnehmbaren Tragkorb mit an den axialen Enden des zugeordneten Abschnitts vorgesehenen Flanschen aufweisen, die jeweils mehrere, im Bereich ihres Umfangs vorgesehene, gleichmäßig über 360° verteilte Aufnahmeausnehmungen aufweisen, in die seitliche Einsteckzapfen von zwischen die Flansche eingreifenden, in Umfangsrichtung hintereinander angeordneten, mit jeweils wenigstens einem Behandlungselement versehenen Umfangselementen lösbar einsteckbar sind, wobei die Flansche an einer jeweils zugeordneten, auf der Welle aufnehmbaren Nabe angebracht sind und wobei die Naben zusammengehörender Flansche durch achsparallele Verbindungsstäbe miteinander verbunden sind.

Der mit Hilfe des erfindungsgemäßen Bausatzes erstellbare Besatz besteht in vorteilhafter Weise aus dem radial inneren Tragkorb und den lösbar hierauf aufnehmbaren, die Behandlungselemente enthaltenden, radial äußeren Umfangselementen. Dadurch dass die Flansche an einer jeweils zugeordneten, auf der Welle aufnehmbaren Nabe angebracht sind, wobei die Naben zusammengehörender Flansche vorteilhaft miteinander verbunden sein können, ergibt sich eine stabile Korbkonstruktion. Die auf dem Tragkorb aufgenommenen Umfangselemente sind in vorteilhafter Weise von radial außen zugänglich und in Folge der lösbaren Steckverbindung mit den Flanschen des Tragekorbs einfach und schnell montierbar bzw. demontierbar. Dies gestattet einen einfachen Austausch einzelner oder aller Umfangselemente, was die Wartung und Instandhaltung sowie einen Wechsel der Art der verwendeten Behandlungselemente erleichtert und vereinfacht. Hierzu müssen lediglich die gewünschten Behandlungselemente tragende umfangselemente bereit gehalten werden, die in jedem Fall mit den erwähnten Steckzapfen versehen sind.

Von den Aufnahmeausnehmungen der Flansche können alle oder nur ausgewählte mit zugeordneten Umfangselementen belegt werden. Auf diese Weise ist es in vorteilhafter Weise möglich, die Belegungsdichte des Besatzes mit Behandlungselementen den Verhältnissen des Einzelfalls anzupassen. Ebenso wäre auch eine einfache Mischbelegung mit unterschiedliche Behandlungselemente aufweisenden Umfangselementen möglich.

Ein weiterer, ganz besonderer Vorteil der erfindungsgemäßen Maßnahmen ist auch darin zu sehen, dass die die Behandlungselemente enthaltenden Umfangselemente durch die Flansche des Tragkorbs vergleichsweise weit von der zentralen Mittelachse distanziert werden können, was in vorteilhafter Weise bereits bei einer vergleichsweise geringen Walzendrehzahl zu einer vergleichsweise hohen Umfangsgeschwindigkeit führt, bei der sich die Behandlungselemente in der erwünschten Weise entgegen der an Ihnen angreifenden Schwerkraft in radialer Richtung ausrichten. Die erfindungsgemäßen Maßnahmen ermöglichen daher in vorteilhafter Weise auch eine Absenkung der erforderlichen Walzendrehzahl und damit eine nicht unbeträchtliche Energieeinsparung.

Da mehrere, axial hintereinander angeordnete Besatzabschnitte vorgesehen sind, werden vergleichsweise kurze Baugruppen geschaffen, die einfach gehandhabt werden können und deren Teile vergleichsweise leicht dimensioniert sein können und dennoch die erforderliche Haltbarkeit aufweisen. Durch Hintereinander-Anordnung mehrerer Besatzabschnitte lassen sich auch vergleichsweise große Besatzlängen erreichen.

Vorteilhafte Ausgestaltungen und zweckmäßige Fortbildungen der übergeordneten Maßnahmen sind in den Unteransprüchen angegeben.

So können vorteilhaft Besatzabschnitte unterschiedlicher axialer Länge Verwendung finden. Hierbei ist es möglich, durch Kombination von Besatzabschnitten unterschiedlicher Länge jede gewünschte Besatzlänge herzustellen.

Eine weitere vorteilhafte Maßnahme kann darin bestehen, dass die Umfangselemente unabhängig von ihrer Bestückung jeweils einen die zugeordneten Flansche überbrückenden Träger aufweisen, auf dem wenigstens ein Behandlungselement aufnehmbar ist und dessen seitliche Endbereiche jeweils als Steckzapfen ausgebildet sind. Dies ergibt einen einfachen und robusten Aufbau der Umfangselemente unabhängig von den vorgesehenen Behandlungselementen. Dieser Aufbau ist für jede Art von Behandlungselementen gleich, was den einfachen Austausch ermöglicht.

In weiterer Fortbildung der übergeordneten Maßnahmen können die Behandlungselemente mit einem vorzugsweise durch einen Hohlsaum gebildeten im Querschnitt ösenförmigen Durchsteckkanal versehen sein, der vom jeweils zugeordneten Träger durchgriffen wird. Dies ermöglicht insbesondere bei fahnenförmigen Behandlungselementen eine besonders einfache Art der Befestigung und ermöglicht auch eine einfache Abnahme der Behandlungselemente beispielsweise für Reinigungszwecke.

Zweckmäßig können die einen Hohlsaum aufweisenden Behandlungselemente einfach mehrere, durch parallele Verbindungsmittel miteinander verbundene Lagen aufweisen. Auf diese Weise ergeben sich nicht nur eine einfache Herstellung des dem Träger zugeordneten Durchführkanals sondern in Folge der Mehrlagigkeit auch eine hohe Besatzdichte.

Vorteilhaft ist die axiale Tiefe der Aufnahmeausnehmungen durch Anschläge begrenzt. Auf diese Weise wird eine automatische Fixierung der mit ihren Steckzapfen in die Aufnahmeausnehmungen eingreifenden Träger in axialer Richtung gewährleistet.

Eine weitere vorteilhafte Maßnahme kann darin bestehen, dass die Aufnahmeausnehmungen wenigstens eines Flansche jedes Tragkorbs einen umfangsseitigen Eingang aufweisen, der durch eine lösbar anbringbare, radiale Abdeckung verschließbar ist. Diese Maßnahme ermöglicht eine einfache Montage bzw. Demontage der Umfangselemente in radialer Richtung. Dabei genügt es, wenn ein Flansch mit umfangsseitig offenen Aufnahmeausnehmungen versehen ist. Die Aufnahmeausnehmungen des jeweils gegenüberliegenden Flansches können in vorteilhafter Weise umfangsseitig geschlossen sein. Hierdurch wird erreicht, dass auf dieser Seite keine zusätzliche radiale Abdeckung benötigt wird, was die Montage bzw. Demontage der Umfangselemente erleichtert.

In weiterer Fortbildung der übergeordneten Maßnahmen können die Naben jeweils eine zentrale Durchführausnehmung mit einer zumindest an den Querschnitt einer stärksten gängigen Welle einer Fahrzeugwaschvorrichtung angepassten lichten Querschnittsweite aufweisen, wobei für Wellen mit geringerer Stärke und/oder abweichender Querschnittsformen jeweils wenigstens ein in die nabenseitige Durchführausnehmung einsetzbarer Adapterring vorgesehen sein kann. Diese Maßnahmen stellen sicher, dass ein und derselbe Tragkorb für alle gängigen Maschinenwellen verwendbar ist. Der erfindungsgemäße Besatz kann daher in vorteilhafter Weise nicht nur bezüglich der Behandlungselemente an die Verhältnisse jedes Einzelfalls angepasst werden, sondern gestattet auch bezüglich der zu besetzenden Maschinenwelle eine universelle Verwendbarkeit.

Vorteilhaft kann die Durchführausnehmung der Naben als Bohrung mit an eine polygonale Welle angepassten Mitnahmeecken ausgebildet sein, so dass für die zugeordnete Welle mit polygonalem Querschnitt, bei der es sich um die größte derartige Welle handeln kann, keine Adapterstücke benötigt werden.

Weitere vorteilhafte Ausgestaltungen und zweckmäßige Fortbildungen der übergeordneten Maßnahmen sind in den restlichen Unteransprüchen angegeben und aus der nachstehenden Beispielsbeschreibung anhand der Zeichnung näher entnehmbar.

In der nachstehend beschriebenen Zeichnung zeigen:
- Figur 1: eine schematische Ansicht einer Arbeitswalze einer Fahrzeugwaschvorrichtung im Schnitt,
- Figur 2: eine perspektivische Ansicht eines axialen Abschnitts des Besatzes der Arbeitswalze gemäß Figur 1,
- Figuren 3-5: Teilansichten von mit unterschiedlichen Behandlungselementen versehenen Umfangselementen,
- Figur 6: einen Radialschnitt durch einen Besatzabschnitt mit einer Verdeutlichung der Montage bzw. Demontage eines Umfangselements und
- Figur 7: eine Stirnansicht einer Nabe des Tragkorbs eines Besatzabschnitts mit verschiedenen zugeordneten Wellen.

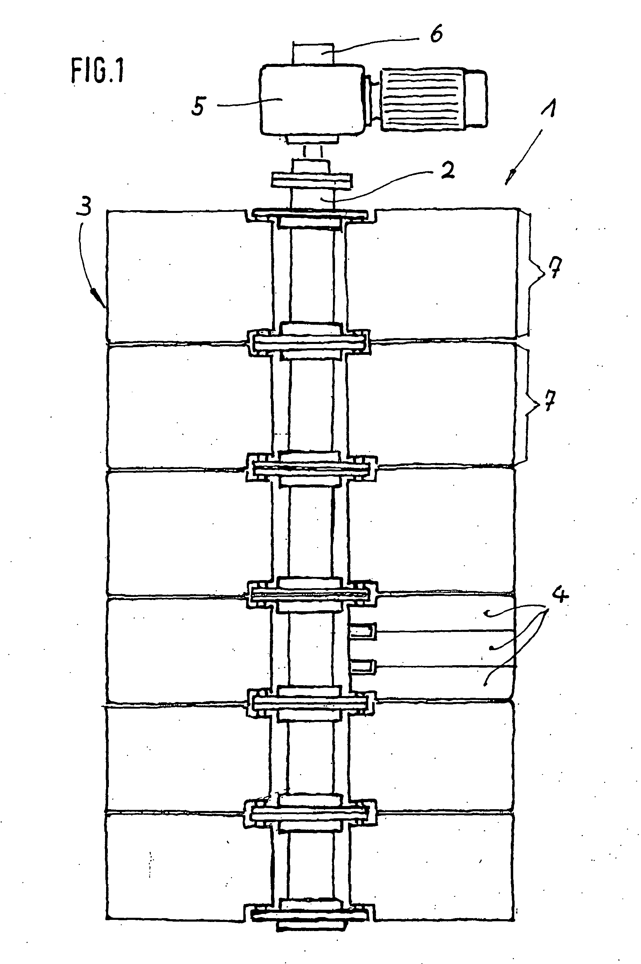

Die der Figur 1 zugrundeliegende, einer nicht näher dargestellten Fahrzeugwaschvorrichtung zugeordnete Arbeitswalze 1 besteht aus einer zentralen Welle 2 und einem auf dieser aufgenommenen Besatz 3, der an einer zu behandelnden Fahrzeugoberfläche zur Anlage bringbare Behandlungselemente 4 enthält. Dabei kann es sich um Filamente, Streifen oder Fahnen mit und ohne Schlitzen jeweils aus Kunststoff und/ oder textilem Material oder dergleichen handeln. Der Besatz 3 stellt ein Zulieferteil dar, das an der vorrichtungsseitig vorgesehenen Welle 2 angebracht wird. Diese ist im dargestellten Beispiel an den Ausgang eines Getriebemotors 5 angeflanscht, der an einem Schwenkarm 6 aufgenommen ist.

Der über praktisch die ganze Wellenlänge durchgehende Besatz 3 besteht aus mehreren, in axialer Richtung hintereinander angeordneten Abschnitten 7. Diese können in axialer Richtung gleiche oder unterschiedliche Länge aufweisen. In der Praxis kommt man mit zwei Längen von vorzugsweise 300 und 350 mm aus. Dies genügt um durch entsprechende Kombination von Abschnitten unterschiedlicher Länge jede gängige Besatzlänge herzustellen.

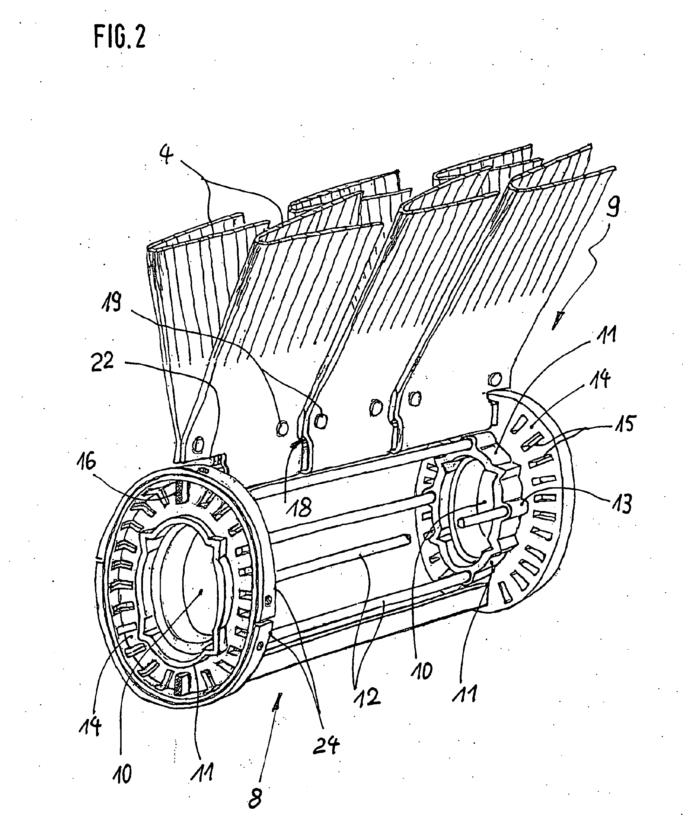

Die Abschnitte 7 enthalten jeweils, wie am besten aus Figur 2 erkennbar ist, einen radial inneren, auf der Welle 2 aufnehmbaren Tragkorb 8, der mehrere, umfangsseitig anbringbare Umfangselemente 9 trägt, von denen in Figur 2 aus Gründen der Übersichtlichkeit nur eines dargestellt ist. Die umfangsseitig anbringbaren Umfangselemente 9 sind in Umfangsrichtung parallel hintereinander angeordnet und enthalten jeweils wenigstens ein, vorzugsweise mehrere Behandlungselemente 4. Das in Figur 2 gezeigte Umfangselemente 9 enthält drei durch einen längs- und quergefalzten Zuschnitt gebildete, als Schlitzfahnen ausgebildete Behandlungselemente. Diese besitzen jeweils zwei Fahnen, die ihrerseits aufgrund der Faltung doppellagig sind, so dass sich insgesamt vier Einzellagen ergeben.

Der Tragkorb 8 besitzt zwei an seinen axialen Enden vorgesehene, mit einer zentralen Durchführausnehmung 10 zum Durchführen der Welle 2 versehene Naben 11, die durch als Distanzorgane fungierende, achsparallele Stäbe 12 miteinander verbunden sind. Die Stäbe 12 greifen mit ihren Enden in zugeordnete, nabenseitig vorgesehene Befestigungsaugen 13 ein und sind hierin festgelegt. Hierzu können zweckmäßig achsparallele Schrauben Verwendung finden. Aber auch eine Schweiß- oder Klebverbindung etc. wäre denkbar. Die Naben 11 tragen jeweils einen radialen Flansch 14, der in seinem Umfangsbereich mit gleichmäßig über den Umfang verteilten Aufnahmeausnehmungen 15, hier in Form rechteckförmiger Zapfenlöcher, versehen ist. Die einander gegenüberliegenden Flansche 14 sind jeweils mit gleich viel, fluchtend einander gegenüberliegenden Aufnahmeausnehmungen 15 versehen. Dabei hat sich eine Anzahl von 24 Aufnahmeausnehmungen 15 am Umfang bewährt.

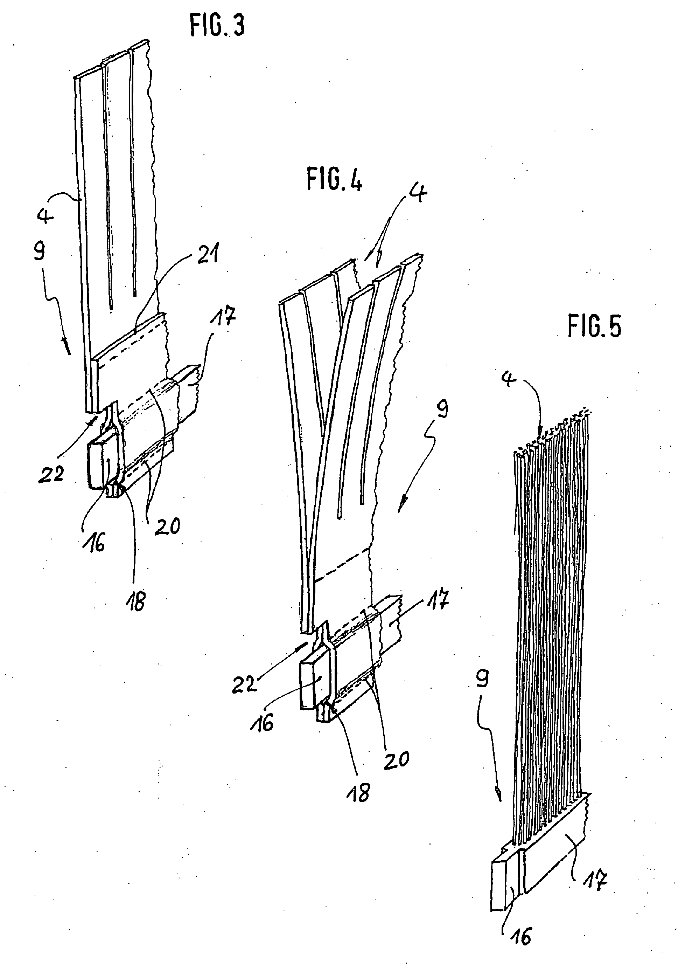

Die Aufnahmeausnehmungen 15 dienen zur Halterung der Umfangselemente 9. Diese sind, wie die Figuren 3 ― 5 anschaulich erkennen lassen, an den axialen Enden ihres radial inneren Rands mit Steckzapfen 16 versehen, die in jeweils eine Aufnahmeausnehmung 15 einsteckbar sind. Hierzu bestehen die Umfangselemente 9 jeweils aus einem die Steckzapfen 16 enthaltenden Träger 17, auf dem das jeweils zugeordnete Behandlungselement bzw. die jeweils zugeordneten Behandlungselemente 4 aufnehmbar sind. Das gilt für alle zu einem erfindungsgemäßen Bausatz gehörenden Umfangselemente unabhängig von der Art der vorgesehenen Behandlungselemente. Der Träger 17 kann als Rund- oder Profilstab ausgebildet sein. In den dargestellten Beispielen ist der Träger 17 jeweils als im Querschnitt rechteckförmige Leiste ausgebildet, deren Enden die Steckzapfen 16 bilden bzw. als diese ausgebildet sind. Die größere Kantenlänge des Querschnitts der Träger 17 weist in radialer Richtung, was in vorteilhafter Weise eine hohe Biegesteifigkeit in radialer Richtung bewirkt.

Wie oben schon ausgeführt wurde, können die Behandlungselemente 4 unterschiedlich gestaltet sein. Der Figur 2 liegen, wie schon erwähnt, durch Längs- und Querfalzung vierlagig ausgebildete Schlitzfahnen zugrunde. Die Figur 3 zeigt ein einlagiges Behandlungselement 4 in Form einer einlagigen Schlitzfahne. Die Figur 4 zeigt eine zweilagige Schlitzfahne. Bei dem der Figur 5 zugrundeliegenden Beispiel sind als Filamente ausgebildete Behandlungselemente vorgesehen. Diese sind zu Büscheln zusammengefasst und in zugeordnete Bohrungen des Trägers 17 eingesetzt.

Die fahnenartigen Behandlungselemente 4 der Figuren 2 ― 4 sind im Bereich ihres radial inneren Rands mit einem Durchsteckkanal 18 versehen, durch den der Träger 17 durchführbar ist, so dass sich eine feste Verbindung zwischen den Behandlungselementen 4 und dem Träger 17 ergibt. Zur Bildung des Durchsteckkanals 18 kann einfach ein Hohlsaum gebildet werden. Dieser ist in Figur 2 durch eine zum radial inneren Querfalz parallele Nietenleiste 19 und in den Figuren 3 und 4 durch parallele Verbindungsnähte 20 gebildet. Bei der Ausführung gemäß Figur 4 werden durch die Nähte 20 einfach die beiden Lagen des doppellagigen Behandlungsorgans 4 miteinander verbunden. Die Verbindung der beiden Lagen ergibt auch eine Vrstärkung des radial inneren Bereichs, was die radiale Ausrichtung der Behandlungsorgane begünstigt. Bei der einlagigen Ausführung gemäß Figur 3 ist zur Bildung einer Verstärkung des radial inneren Bereichs eine Verstärkungsauflage 21 vorgesehen, die durch die Nähte 20 mit dem inneren Bereich des Behandlungsorgans 4 verbunden ist. Anstelle eines Durchsteckkanals wäre es selbstverständlich auch denkbar, Durchführösen etc. vorzusehen. In jedem Fall sind die Behandlungselemente 4 dabei vom Träger 17 abziehbar. Es wäre aber auch denkbar, die Behandlungselemente 4 einfach fest mit dem Träger 17 zu verschrauben oder zu vernieten oder dergleichen. Eine derartige Ausführung mit nicht abnehmbaren Behandlungselementen liegt der Figur 5 zugrunde. Dabei ist der Träger 17 als mit Bohrungen zur Aufnahme der Filamentbüschel versehener Bürstenrücken ausgebildet.

Bei der Ausführung gemäß Figur 5 ist der Träger 17 nur im Bereich zwischen den Einsteckzapfen 16 mit Filamentbüscheln besetzt. Im Bereich der Einsteckzapfen 16 befinden sich keine Filamente. Bei einem mit derartigen Behandlungselementen versehenen Besatz ergeben sich daher zwischen den einander benachbarten Besatzabschnitten 7 behandlungselementlose Spalte. Die fahnenartigen Behandlungsorgane 4 der Ausführungen gemäß Figuren 2 ― 4 sind im Bereich ihres radial inneren Rands mit seitlichen Randausnehmungen 22 versehen, in welche der jeweils zugeordnete Einsteckzapfen 16 hineinragt bzw. in welche im montierten Zustand der jeweils zugeordnete Flansch 14 eingreift.

Es genügt, wenn lediglich die den Flanschen 14 zugewandten Randbereiche der den Flanschen 14 zugewandten Behandlungselemente 4 mit Ausnehmungen 22 versehen sind. Selbstverständlich können aber auch alle Behandlungselemente im Bereich beider Randkanten mit Ausnehmungen versehen sein, wie in Figur 1 angedeutet ist. dies erleichtert die Montage. Zweckmäßig können dabei den inneren Randausnehmungen zugeordnete Füllstücke zugeordnet sein, wie Figur 1 weiter erkennen lässt. Die seitlichen Randausnehmungen 22 stellen sicher, dass die seitlichen Behandlungselemente 4 über die Flansche 14 auskragen können, so dass sich bei einem mit derartigen Behandlungselementen versehenen Besatz zwischen den einander benachbarten Besatzabschnitten 7 keine nennenswerten behandlungselementlosen Spalte ergeben.

Die Aufnahmeausnehmungen 15 und die die zugeordneten Einsteckzapfen 16 besitzen im dargestellten Beispiel einen rechteckförmigen Querschnitt, so dass sich eine automatische Drehsicherung ergibt. Zweckmäßig kann der ganze Träger 17 einen rechteckförmigen Querschnitt aufweisen, so dass sich auch eine Drehsicherung der vom Träger 17 durchgriffenen Behandlungselemente 4 gegenüber dem Träger 17 ergibt.

Die Träger 17 können entsprechend einer Schraubenlinie mit hoher Steigung ausgebildet sein, so dass die einander gegenüberliegenden Einsteckzapfen 16 in am Umfang gegeneinander versetzte aufnahmeausnehmungen 15 zum Eingriff kommen. Die ergibt in vorteilhafter Weise einen ziehenden Eingriff der auf einem Träger 17 nebeneinander angeordneten Behandlungselemente 4. In den dargestellten Ausführungsbeispielen besitzen die Träger 17 einen achsparallelen Verlauf, so dass ihre beiden Einsteckzapfen 16 in fluchtend einander gegenüberliegende Aufnahmeausnehmungen 15 eingreifen. Dies ergibt eine besonders einfache Herstellbarkeit der Träger 17 als Abschnitte gerader Leisten, Stangen oder Schienen.

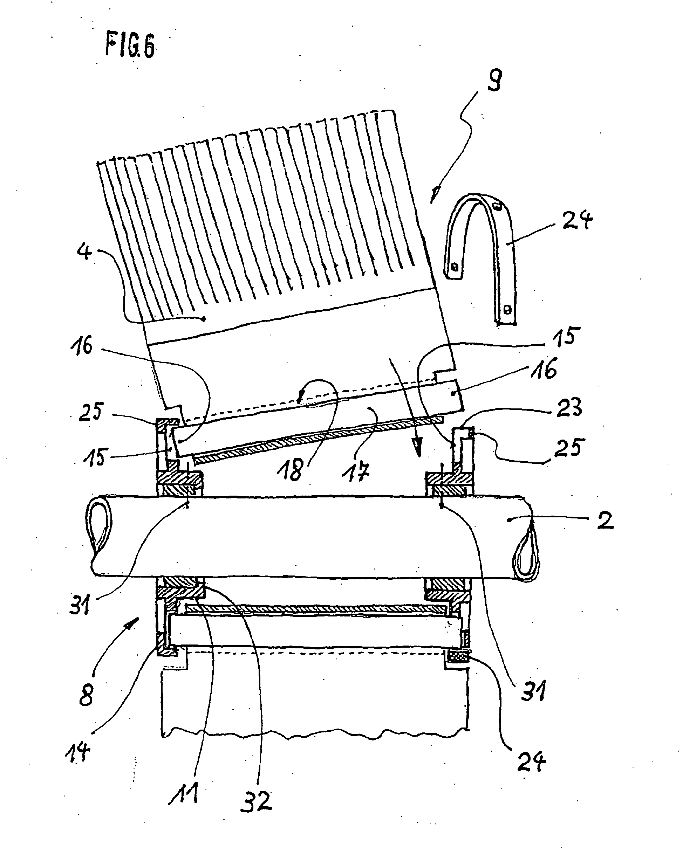

Die Umfangselemente 9 werden, wie am besten aus Figur 6 erkennbar ist, von radial außen montiert bzw. demontiert. Hierzu sind die Aufnahmeausnehmungen 15 wenigsten eines Flansches 14 jedes Korbs 8 umfangsseitig offen, so dass sich ein umfangsseitiger Eingang 23 ergibt, wie in Figur 6 rechts angedeutet ist. Die Aufnahmeausnehmungen 15 des anderen Flansches 14, hier des links gezeichneten Flansches 14, können umfangsseitig geschlossen sein. Zum Einsetzen der die seitlichen Einsteckzapfen aufweisenden Umfangselemente 9 werden diese, wie Figur 6 weiter erkennen lässt, zunächst in einer gegenüber der Korbachse geneigten Stellung mit einem Einsteckzapfen 16 in etwa axialer Richtung in eine zugeordnete, umfangsseitig geschlossene Aufnahmeausnehmung 15 eingeführt.

Anschließend wird das betreffende Umfangselement 9, wie in Figur 6 durch einen Pfeil angedeutet ist, so geschwenkt, dass der zweite Einsteckzapfen 16 in etwa radialer Richtung in die zugeordnete, nach radial außen offene Einsteckausnehmung 15 eingeführt wird. Anschließend wird der offene Eingang 23 durch eine umfangsseitig lösbar anbringbare Abdeckung 24 verschlossen. Dabei kann es sich um ein über mehrere Eingänge 23 sich erstreckendes, bei der Ausführung gemäß Figur 6 über 180° sich erstreckendes Ringsegment handeln, das auf die Umfangsseite des die umfangsseitig offenen Aufnahmeausnehmungen 15 aufweisenden Flansches 14 aufgelegt und mit Schrauben etc. lösbar hieran festgelegt wird. Die Demontage der Umfangselemente 9 erfolgt in umgekehrter Richtung.

Zweckmäßig erfolgen die Montage und Demontage der Umfangselemente 9 von oben bzw. nach oben, so dass die Umfangselemente 9 auch nach Abnahme der Abdeckung 24 nicht ungewollt außer Eingriff mit dem Korb 8 kommen können. Die axiale Tiefe der Aufnahmeausnehmungen 15 ist durch Anschläge 25 begrenzt, so dass die Einsteckzapfen 16 bzw. der diese enthaltende Träger 17 und hiermit das gesamte Umfangselement 9 automatisch in axialer Richtung fixiert werden.

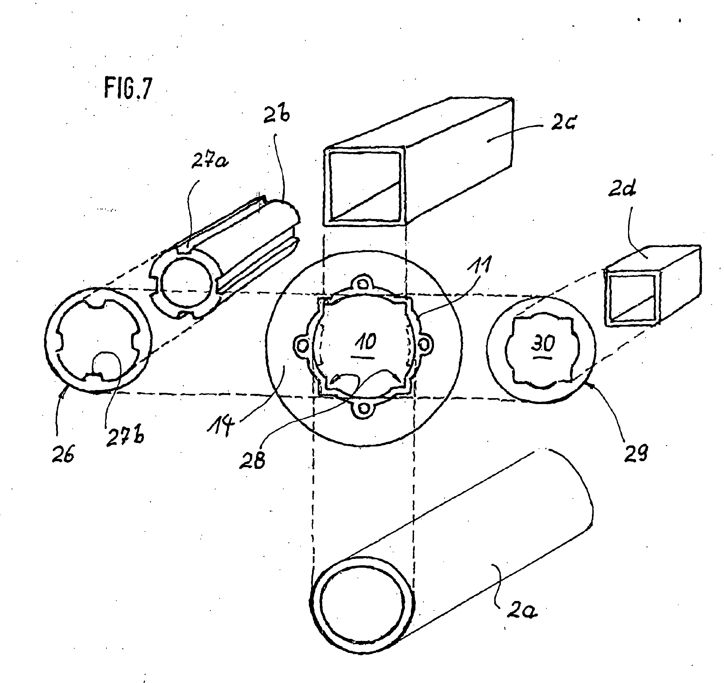

Die Durchführausnehmung 10 der Naben 11 ist vorteilhaft so gestaltet, dass eine universelle Verwendbarkeit unabhängig von der Konfiguration der vorhandenen Welle 2 möglich ist. Hierzu besitzen die Durchführausnehmungen 10, wie am besten aus Figur 7 erkennbar ist, jeweils einen lichten Querschnitt, der zumindest an den Querschnitt einer der stärksten, gängigen Wellen angepasst ist. Auf eine derartige Welle 2a können die Naben 11 passend aufgesteckt werden. Für Wellen 2b mit kleinerem Durchmesser erfolgt eine Anpassung überringförmige Adapterstücke 26, deren Außenkonfiguration der Außenkonfiguration der stärksten Welle 2a und deren Innenkonfiguration der Außenkonfiguration der zugeordneten Welle 2b entspricht. Im dargestellten Beispiel besitzt die Welle 2b Umfangsnuten 27a. Dementsprechend besitzt der zugeordnete Adapterring 26 nach radial innen vorspringende Federn 27b. In Anpassung an die Außenkonfiguration der Welle 2a ist die Durchführausnehmung 10 nach Art einer Bohrung ausgebildet. Diese besitzt im dargestellten Beispiel vier umfangsseitige Mitnahmeecken 28, so dass sich gleichzeitig auch ein einer Vierkantwelle 2c zugeordneter lichter Querschnitt der Durchführausnehmung 10 ergibt.

Dabei handelt es sich um eine Vierkantwelle, deren Querschnittsdiagonale größer als der Durchmesser der größten gängigen Rundwelle 2a ist. Die Form der Durchführausnehmung 10 ergibt sich dementsprechend durch eine Verschneidung des Querschnitts der größten gängigen Rundwelle 2a und der Rechteckwelle 2c, bei der es sich ebenfalls um die größte gängige Rechteckwelle handeln kann. Für schwächere Rechteckwellen 2d können wiederum entsprechende Adapterstücke 29 vorgesehen sein. Die Durchführausnehmung 30 des Adapterstücks 29 ist hier ähnlich gestaltet wie die nabenseitige Durchführausnehmung 10, nämlich als Verschneidung eines Rundquerschnitts und eines Rechteckquerschnitts, so dass das Adapterstück 29 für beiderlei Wellen geeignet ist.

Die Adapterstücke 26 bzw. 29 werden mit der zugeordneten Nabe 11 verbunden. Hierzu können die Adapterstücke in die zugeordnete Nabe 11 eingeklemmt oder eingeklebt werden oder dergleichen. Vielfach kann jedoch darauf verzichtet werden. Die Naben 11 werden nämlich ihrerseits durch in Figur 6 lediglich durch ihre Mittellinien angedeutete Schrauben 31 auf der zugeordneten Welle 2 befestigt und damit in axialer Richtung gesichert. Sofern Adapterstücke 26, 29 vorgesehen sind, gehen die Schrauben 31 auch durch die Adapterstücke durch, wodurch diese gegenüber der zugeordneten Nabe und der Welle 2 gesichert sind.

Um auf einfache Weise eine exakte axiale Position des jeweils verwendeten Adapterstücks 26 bzw. 29 zu gewährleisten, kann es vorteilhaft sein, im Bereich der Durchführausnehmung 10 wenigstens einen dem Adapterstück zugeordneten Anschlag 32 vorzusehen, wie in Figur 6 links ersichtlich ist. Der Anschlag 32 kann zweckmäßig im Bereich der inneren Nabenstirnseite an die Nabe 11 angeformt sein. In einem derartigen Fall wird der lichte Durchmesser der Durchführausnehmung 10 durch die Anschlaganordnung begrenzt, wie in Figur 7 durch unterbrochene Linien angedeutet ist. Zweckmäßig ist dabei der im Bereich der Anschlaganordnung vorgesehene lichte Durchmesser auf den Durchmesser des größten gängigen Rundrohrs abgestimmt. Da die Anschläge eine vergleichsweise kleine axiale Breite besitzen ist hierbei zur Erzielung einer ausreichenden Auflagebreite für die Welle 2a ein als die radiale Höhe der Anschläge überbrückender Ausgleichsring fungierendes Adapterstück erforderlich. Sofern Anschläge 32 oben genannter Art vorgesehen sind, werden daher außer für die in den Mitnehmerecken 28 aufnehmbare, größte Mehrkantwelle 2c für alle anderen Wellen entsprechend angepasste Adapterstücke benötigt, deren radiale Dicke der radialen Höhe der Anschläge oder mehr beträgt.

## Patentansprüche

1. Bausatz für einen mit zum Eingriff mit einer Fahrzeugoberfläche bringbaren Behandlungselementen (4) versehenen Besatz (3) einer Arbeitswalze (1) einer Fahrzeugwaschvorrichtung, wobei mehrere axiale Besatzabschnitte (7) vorgesehen sind, die jeweils einen radial inneren, auf einer zugeordneten Welle (2) der Vorrichtung aufnehmbaren Tragkorb (8) mit im Bereich der axialen Enden des zugeordneten Besatzabschnits (7) vorgesehenen Flanschen (14) aufweisen, die jeweils mehrere, im Bereich ihres Umfangs vorgesehene gleichmäßig über 360° verteilte Aufnahmeausnehmungen (15) aufweisen, in denen seitliche Einsteckzapfen (16) von zwischen die Flansche (14) eingreifenden, in Umfangsrichtung hintereinander angeordneten, mit jeweils wenigstens einem Behandlungselement (4) versehenen Umfangselementen (9) lösbar aufnehmbar sind, **dadurch gekennzeichnet, dass** die Flansche (14) an einer jeweils zugeordneten, auf der Welle (2) aufnehmbaren Nabe (11) angebracht sind und die Naben (11) zusammengehörender Flansche (14) durch achsparallele Verbindungsstäbe (12) miteinander verbunden sind.

2. Bausatz nach Anspruch 1, **dadurch gekennzeichnet, dass** Besatzabschnitte (7) unterschiedlicher axialer Länge vorgesehen sind.

3. Bausatz nach einem der vorhergehenden Ansprüche, **dadurch gekennzeichnet, dass** die Umfangselemente (9) unabhängig von ihrer Bestückung jeweils einen die zugeordneten Flansche (14) überbrückenden Träger (17) aufweisen, auf dem wenigstens ein Behandlungselement (4) vorzugsweise mehrere, nebeneinander angeordnete Behandlungselemente (4) aufnehmbar ist bzw. sind und dass die seitlichen Endbereiche der Träger (17) jeweils als Steckzapfen (16) ausgebildet sind, wobei vorzugsweise den Steckzapfen (16) bei fahnenartiger Ausbildung der Behandlungselemente (4) jeweils eine seitliche Randausnehmung (22) des jeweils benachbarten Behandlungselements (4) zugeordnet ist.

4. Bausatz nach Anspruch 3, **dadurch gekennzeichnet, dass** die Behandlungselemente (4) mit einem im Querschnitt ösenförmigen Durchsteckkanal (18) versehen sind, der vom jeweils zugeordneten Träger (17) durchgriffen ist, wobei die Behandlungselemente (4) vorzugsweise mehrere, durch den Durchsteckkanal (18) begrenzende Verbindungsmittel (19 bzw. 20) miteinander verbundene Lagen aufweisen.

5. Bausatz nach einem der vorhergehenden Ansprüche 3 oder 4, **dadurch gekennzeichnet, dass** die Steckzapfen (16) und / oder die Träger (17) einen von einem Kreisquerschnitt abweichenden, vorzugsweise rechteckförmigen Querschnitt aufweisen.

6. Bausatz nach einem der vorhergehenden Ansprüche, **dadurch gekennzeichnet, dass** die Umfangselemente (9) achsparallel angeordnet sind und mit ihren Steckzapfen (16) in in axialer Richtung miteinander fluchtende, flanschseitige Aufnahmeausnehmungen (15) eingreifen, deren die axiale Tiefe vorzugsweise durch Anschläge (25) begrenzt ist.

7. Bausatz nach einem der vorhergehenden Ansprüche, **dadurch gekennzeichnet, dass** jeweils 24 Aufnahmeausnehmungen (15) am Umfang der Flansche (14) vorgesehen sind.

8. Bausatz nach einem der vorhergehenden Ansprüche, **dadurch gekennzeichnet, dass** die Aufnahmeausnehmungen (15) wenigstens eines Flansches (14) jedes Korbs (8) einen umfangsseitigen Eingang (23) aufweisen, der durch eine lösbar anbringbare, radiale Abdeckung (24) verschließbar ist, die vorzugsweise mehrere, über höchstens 180° sich erstreckende Ringsegmente (24) aufweist und dass vorzugsweise die Aufnahmeausnehmungen (15) wenigstens eines Flansches (14) umfangsseitig geschlossen sind.

9. Bausatz nach einem der vorhergehenden Ansprüche, **dadurch gekennzeichnet, dass** die Naben (11) lösbar an den Enden der zugeordneten Verbindungsstäbe (12) festlegbar sind.

10. Bausatz nach einem der vorhergehenden Ansprüche, **dadurch gekennzeichnet, dass** die Flansche (14) an einer jeweils zugeordneten, auf der Welle (2) aufnehmbaren Nabe (11 ) angebracht sind, die jeweils eine zentrale Durchführungsausnehmung (10) mit einer zumindest an den Querschnitt der stärksten gängigen Welle (2) angepassten, lichten Querschnittsweite aufweist und dass für Wellen geringerer Stärke und/oder abweichender Querschnittsformen jeweils wenigstens ein in die Durchführungsausnehmung (10) einsetzbarer Adapterring (26) bzw. (29) vorgesehen ist, wobei die Durchführungsausnehmung (10) vorzugsweise als Bohrung mit an eine polygonale Welle (2c) angepassten Mitnahmeecken (28) ausgebildet ist und wobei vorzugsweise im Bereich der Durchführausnehmung (10) eine axiale Anschlageinrichtung (32) vorgesehen ist, der ein Ausgleichsring gleicher Höhe zugeordnet ist.

## Claims

1. A kit for the trimming (3) of a work roll (1) of a car wash apparatus, provided with treatment elements (4) which can be brought into engagement with a vehicle surface, composed of several axial trimming sections (7), each of which comprising radially inward thereof a carrying basket (8) which is receivable by an associated shaft (2) of the apparatus and provided with flanges (14) arranged in the area of the axial ends of the associated trimming section (7), such flanges comprising a plurality of locating recesses (15) which are equally spaced over the entire 360° circumference thereof, wherein lateral insertion noses (16) of circumferential elements (9) are removably receivable, such circumferential elements (9) being engagingly arranged between the flanges (14), being disposed one behind the other in a circumferential direction and each being provided with at least one treatment element (4), **characterised in that** each of the flanges (14) is mounted on an associated hub (11) receivable by the shaft (2) and that such hubs (11) of associated flanges (14) are mutually connected by axis-parallel connecting rods (12).

2. A kit in accordance with claim 1, **characterised in that** provision is made for trimming sections (7) of different axial length.

3. A kit in accordance with any of the preceding claims, **characterised in that** the circumferential elements (9), irrespective of the number of treatment elements attached thereto, are provided with a carrier (17) each which connects the associated flanges (14) and receives at least one treatment element (4), but preferably several treatment elements (4) arranged side by side, and that the lateral end sections of the said carrier (17) are designed as insertion noses (16), with each of the insertion noses (16), in the case of a flag-shaped design of the treatment elements (4), being preferably associated with a lateral rim recess (22) of the adjacent treatment element (4).

4. A kit in accordance with claim 3, **characterised in that** each of the treatment elements (4) is provided with a push-through slot (18) of lug-shaped cross section, passed through by the associated carrier (17), with the treatment elements (4) preferably having several interconnected layers (19 and 20, respectively) which are limited by the push-through slot (18).

5. A kit in accordance with any of the preceding claims 3 or 4, **characterised in that** the insertion noses (16) and/or the carriers (17) have a cross-section deviating from a circular configuration, preferably a rectangular cross-section.

6. A kit in accordance with any of the preceding claims, **characterised in that** the circumferential elements (9) are arranged axis-parallel and with their insertion noses (16) engage locating recesses (15) mutually aligned in an axial direction provided on the flanges, whose axial depth is preferably limited by stops (25).

7. A kit in accordance with any of the preceding claims, **characterised in that** 24 receiving recesses (15) are provided along the circumference of each of the flanges (14).

8. A kit in accordance with any of the preceding claims, **characterised in that** the receiving recesses (15) of at least one flange (14) of each basket (8) comprise a circumferential entry (23) which is closable by a removably attachable radial cover (24) preferably having several annular segments (24) extending over a maximum range of 180°and that preferably the receiving recesses (15) of at least one flange (14) are circumferentially closed.

9. A kit in accordance with any of the preceding claims, **characterised in that** the hubs (11) are removably attachable to the ends of the associated connecting rods (12).

10. A kit in accordance with any of the preceding claims, **characterised in that** the flanges (14) are mounted on an associated hub (11) receivable by the shaft (2), each hub having a central aperture (10) with a clear cross-sectional width suiting the cross-section of at least the largest-diameter shaft (2), and that for shafts of a smaller diameter and/or of a deviating cross-sectional configuration provision is made for at least one adapter ring (26) or (29) to suit the shape of the aperture (10), with the latter being preferably designed as an opening provided with driving recesses matching the shape of a polygonal shaft (2c) and with provision being made for an axial stop arrangement (32) preferably disposed in the area of the aperture (10), such stop arrangement being associated with an adapter ring of the same height.

## Revendications

1. Kit de montage pour une garniture (3) d'un cylindre de travail (1) d'une installation de lavage de voiture, ladite garniture étant pourvue d'éléments de traitement (4) qui peuvent être mise en appui sur une surface d'un véhicule, plusieurs sections axiales de garniture (7) étant prévues qui présentent chacune une cage de support (8) radialement intérieure pouvant être reçue sur un arbre associé (2) de ladite installation et ayant des brides (14) prévues au niveau des extrémités axiales de la section associée de garniture (7), lesdites brides présentent respectivement plusieurs évidements de réception (15) prévus au niveau de la circonférence de celles-ci et répartis uniformément sur 360° et qui sont aptes à recevoir de manière amovible des tenons latéraux à introduire (16) d'éléments circonférentiels (9) s'engageant entre lesdites brides (14), disposés les uns derrière les autres dans la direction circonférentielle et pourvus chacun d'au moins un élément de traitement (4), **caractérisé par le fait que** lesdites brides (14) sont montées sur un moyeu (11) respectivement associé qui peut être reçu sur ledit arbre (2) et que les moyeux (11) de brides (14) allant ensemble sont reliés entre eux par l'intermédiaire de barres de liaison (12) parallèles à l'axe.

2. Kit de montage selon la revendication 1, **caractérisé par le fait que** l'on prévoit des sections de garniture (7) de longueur axiale différente.

3. Kit de montage selon l'une des revendications précédentes, **caractérisé par le fait que** lesdits éléments circonférentiels (9) présentent chacun, indépendamment de leur équipement, un support (17) pontant les brides associées (14) qui est apte à recevoir au moins un élément de traitement (4), de préférence plusieurs éléments de traitement (4) disposés les uns à côté des autres, et que les zones latérales d 'extrémité des supports (17) sont réalisées respectivement en tant que tenons à introduire (16), de préférence, dans le cas d'une configuration de type drapeau des éléments de traitement (4), respectivement un évidement latéral marginal (22) de l 'élément de traitement (4) respectivement voisin étant associé aux tenons à introduire (16).

4. Kit de montage selon la revendication 3, **caractérisé par le fait que** lesdits éléments de traitement (4) sont pourvus d'un canal de traversée (18) qui, en coupe transversale, présente une forme d'oeillet et qui est traversé par le support (17) respectivement associé, de préférence les éléments de traitement (4) présentant plusieurs couches reliées entre elles par des moyens de liaison (19 ou bien 20) limitant ledit canal de traversée (18).

5. Kit de montage selon l'une des revendications précédentes 3 ou 4, **caractérisé par le fait que** lesdits tenons à introduire (16) et/ou lesdits supports (17) présentent une section transversale différant d'une section transversale circulaire, de préférence une section transversale rectangulaire.

6. Kit de montage selon l'une des revendications précédentes, **caractérisé par le fait que** les éléments circonférentiels (9) sont disposés parallèlement à l'axe et se prennent par leurs tenons à introduire (16) dans des évidements de réception (15) ménagés sur les brides et alignés les uns avec les autres dans la direction axiale, la profondeur axiale de ces évidements étant limitée, de préférence, par des butées (25).

7. Kit de montage selon l'une des revendications précédentes, **caractérisé par le fait que** respectivement 24 évidements de réception (15) sont prévus sur la circonférence des brides (14).

8. Kit de montage selon l'une des revendications précédentes, **caractérisé par le fait que** les évidements de réception (15) d'au moins une bride (14) de chaque cage (8) présentent une entrée (23) située sur la circonférence laquelle peut être obturée par une couverture radiale (24) qui peut être montée de façon amovible et qui présente de préférence plusieurs segments annulaires (24) s'étendant sur 180° tout au plus, et que de préférence les évidements de réception (15) d'au moins une bride (14) sont fermés circonférentiellement.

9. Kit de montage selon l'une des revendications précédentes, **caractérisé par le fait que** lesdits moyeux (11) peuvent être fixés de manière amovible sur les extrémités des barres de liaison (12) associées.

10. Kit de montage selon l'une des revendications précédentes, **caractérisé par le fait que** lesdites brides (14) sont montés sur un moyeu (11) respectivement associé qui peut être reçu sur ledit arbre (2) et qui présente respectivement un évidement central de passage (10) ayant une largeur intérieure adaptée au moins à la section transversale de l'arbre (2) courant le plus épais, et que - pour les arbres présentant une épaisseur plus faible et/ou des formes différentes de section transversale - on prévoit respectivement au moins un anneau adaptateur (26) ou bien (29) qui peut être inséré dans ledit évidement de passage (10), l'évidement de passage (10) étant réalisé de préférence en tant que perçage ayant des coins d'entraînement (28) adaptés à un arbre polygonal (2c), et de préférence au niveau de l'évidement de passage (10) étant prévu un dispositif axial de butée (32) auquel est associé un anneau compensateur de même hauteur.
